# EUROPEAN PATENT APPLICATION

(11) **EP 3 216 816 A1**
(43) Date of publication of application: **13.09.2017**
(21) Application number: 15857027.5
(22) Date of filing: 06.11.2015
(51) Int. Cl.: C08G 65/04, C09K 3/00, C10M 145/26, C10M 177/00, C10N 40/02, C10N 40/04, C10N 40/06, C10N 40/25, C10N 40/30, C10N 70/00

(54) **METHOD FOR PRODUCING POLYALKYLENE GLYCOL, VISCOSITY INDEX IMPROVER, LUBRICATING OIL COMPOSITION, AND METHOD FOR PRODUCING LUBRICATING OIL COMPOSITION**

(30) Priority: 07.11.2014 JP 2014227557
(71) Applicant: Idemitsu Kosan Co., Ltd, Tokyo 100-8321 (JP)
(72) Inventor: NAKANO, Taeko, Sodegaura-shi Chiba 299-0293 (JP); KISEN, Tadashi, Sodegaura-shi Chiba 299-0293 (JP)
(74) Representative: Hoffmann Eitle
(86) International application number: PCT/JP2015/081395
(87) International publication number: WO 2016/072514

(57) **Abstract**

The method for producing a polyalkylene glycol of the present invention is a method for producing a polyalkylene glycol, including performing a polymerization reaction of an alkylene oxide with a composite metal catalyst, the polymerization reaction being performed in the presence of an organic solvent in an amount of 10 to 90 mass% based on the polyalkylene glycol to be produced.

## Description

### Technical Field

The present invention relates to a method for producing a polyalkylene glycol (which may be hereinafter referred to as PAG) with a composite metal catalyst, a viscosity index improver and a lubricating oil composition using PAG that is produced by the production method, and a method for producing a lubricating oil composition.

### Background Art

PAG has been widely used as a raw material for a polyurethane product, such as an elastomer, an adhesive, and a sealant, and a functional oil agent. In general, PAG is produced through addition polymerization of an alkylene oxide, such as ethylene oxide and propylene oxide, to an initiator having an active hydrogen atom, such as various alcohols.

As a catalyst for the addition polymerization, an alkali catalyst has been widely used. With an alkali catalyst, an unsaturated alcohol is formed through side reaction, and functions as an initiator, and thus it is difficult to produce PAG having a molecular weight exceeding 6,500. Accordingly, for example, such a method has been attempted that PAG is produced by using the composite metal cyanide complex as a catalyst, as described in PTL 1. The use of a composite metal cyanide complex may suppress the formation of an unsaturated alcohol through side reaction, and may enables the production of PAG having a relatively high molecular weight.

Furthermore, for example, PTL 2 describes that in the case where the composite metal cyanide complex is used as a catalyst, an organic solvent is used in combination in the reaction system for suppressing the viscosity of the resulting PAG from being increased. In the method described in PTL 2, the organic solvent is assumed to be removed, the amount of the organic solvent added is determined to be 5 mass% or less in consideration of the easiness of removal of the organic solvent and the effect of suppressing the viscosity increase.

### Citation List

### Patent Literatures

PTL 1: U.S. Patent No. 3,278,458
PTL 2: Japanese Patent No. 2,946,580

### Summary of Invention

### Technical Problem

However, in the case where, for example, PAG having a high molecular weight exceeding 10,000 is tried to be produced by the method described in PTL 2, there is room for improvement in the efficient production of PAG having a high molecular weight in such a point that the viscosity of the reaction liquid becomes too high in the latter half of the reaction, resulting in difficulty in agitation and considerable decrease in reaction rate.

The present invention has been made in view of the aforementioned problems, and an object thereof is to provide a production method that is capable of producing efficiently PAG having a high molecular weight.

### Solution to Problem

As a result of earnest investigations by the present inventors, it has been found that the problem can be solved by a method for producing a polyalkylene glycol (PAG) by polymerizing an alkylene oxide with a composite metal catalyst, in which the proportion of an organic solvent blended is in a certain range, and thus the present invention has been completed. According to one aspect of the present invention, the following items [1] to [4] are provided.
[1] A method for producing a polyalkylene glycol, including performing a polymerization reaction of an alkylene oxide with a composite metal catalyst, the polymerization reaction being performed in the presence of an organic solvent in an amount of 10 to 90 mass% based on the polyalkylene glycol to be produced.
[2] A viscosity index improver containing the polyalkylene glycol having a weight average molecular weight of 20,000 or more that is obtained by the production method according to the item [1].
[3] A lubricating oil composition containing the polyalkylene glycol that is obtained by the production method according to the item [1].
[4] A method for producing a lubricating oil composition, including blending a mixture containing the polyalkylene glycol that is obtained by the production method according to the item [1] and the organic solvent.

### Advantageous Effects of Invention

According to the present invention, a polyalkylene glycol having a high molecular weight can be efficiently produced by making an organic solvent present in the polymerization reaction in the prescribed proportion.

### Description of Embodiments

The present invention will be described with reference to embodiments.

The method for producing a polyalkylene glycol (PAG) according to the present embodiment is to produce a polyalkylene glycol by polymerizing an alkylene oxide with a composite metal catalyst in the presence of an organic solvent.

### <Composite Metal Catalyst>

The composite metal catalyst used in the polymerization reaction is preferably a composite metal cyanide complex catalyst. The composite metal cyanide complex catalyst preferably contains an organic ligand, and the organic ligand used may be various compounds described later and is preferably an alcohol compound.

Specific examples of the composite metal cyanide complex catalyst include a compound having a structure represented by the following general formula (1).

M_{a[}M'ₓ(CN)_{y}]_{b}(H₂O)_{c}(R)_{d} (1)

In the general formula, M represents Zn(II), Fe(II), Fe(III), Co(II), Ni(II), Al(III), Sr(II), Mn(II), Cr(III), Cu(II), Sn(II), Pb(II), Mo(IV), Mo(VI), W(IV), W(VI), or the like; M' represents Fe(II), Fe(III), Co(II), Co(III), Cr(II), Cr(III), Mn(II), Mn(III), Ni(II), V(IV), V(V), or the like; R represents an organic ligand; a, b, x, and y each are a positive integer that varies depending on the valency and the coordination number of the metal; and c and d each are a positive number that varies depending on the coordination number of the metal.

In the general formula (1), M preferably represents Zn(II), and M' preferably represents Fe(II), Fe(III), Co(II), Co(III), or the like. Examples of the organic ligand include a ketone compound, an ether compound, an aldehyde compound, an ester compound, an alcohol compound, and an amide compound, and an alcohol compound is preferred. Examples of the usable alcohol compound include t-butyl alcohol, n-butyl alcohol, sec-butyl alcohol, isobutyl alcohol, tert-pentyl alcohol, and isopentyl alcohol, and among these, t-butyl alcohol is preferred.

The composite metal cyanide complex represented by the general formula (1) may be produced in such a manner that aqueous solutions or mixed solvent solutions with water and an organic solvent of a metal salt MXₐ (wherein M and a are the same as above; and X represents an anion forming a salt with M) and a polycyanometallate (salt) Zₑ[M'ₓ(CN)_{y}]_{f} (wherein M', x, and y are the same as above; Z represents hydrogen, an alkali metal, an alkaline earth metal, or the like; and e and f each represent a positive integer determined by the valency and the coordination number of Z and M') are mixed to provide a composite metal cyanide complex, with which a compound forming the organic ligand R is made contact, and then the excessive solvent and the excessive compound forming the organic ligand R are removed.

In the polycyanometallate (salt) Zₑ[M'ₓ(CN)_{y}]_{f}, hydrogen and various metals, such as an alkali metal, can be used as Z, and a lithium salt, a sodium salt, a potassium salt, a magnesium salt, and a calcium salt are preferred. Normal alkali metal salts, i.e., a sodium salt and a potassium salt are particularly preferred.

The composite metal cyanide complex represented by the general formula (1) can be formed into a slurry form by mixing with a part of an initiator described later. Accordingly, the composite metal cyanide complex can be handled as a slurry form by mixing a part of the initiator, while the contact with the compound forming the organic ligand or after the contact with the compound forming the organic ligand.

### <Organic Solvent>

In the present embodiment, the polymerization reaction is performed in the presence of an organic solvent in an amount of 10 to 90 mass% based on the polyalkylene glycol (PAG) to be produced. In the present embodiment, when the amount of the organic solvent is 10 mass% or more, the reaction liquid can be prevented from being increased in viscosity during the reaction, enabling PAG produced to have a high molecular weight. When the amount thereof is 90 mass% or less, PAG having a high molecular weight can be efficiently produced. In these points of view, the organic solvent is preferably present in an amount of 30 to 70 mass% based on the PAG to be produced.

Examples of the organic solvent used in the present embodiment include an ether compound. In the case where the organic solvent is blended in a lubricating oil composition without removal, the ether compound can be favorably used as a base oil. Examples of the ether compound include a monoether, a diether, a polyether, a polyvinyl ether, and a polyalkylene glycol ether.

Examples of the monoether include a dialkyl ether, an alkyl group of which is a branched or linear alkyl group having 1 to 12 carbon atoms, particularly 5 to 12 carbon atoms, and specific examples thereof include a symmetrical ether, such as di-2-ethylhexyl ether and di-3,5,5-trimethylhexyl ether, and an asymmetrical ether, such as 2-ethylhexyl-n-octyl ether and 3,5,5-trimethylhexyl-n-nonyl ether. In the case where the organic solvent is blended in a lubricating oil composition without removal, the ether compound can be more favorably used as a base oil by using an alkyl group having 5 to 12 carbon atoms.

The diether used may be a dialkyl diether, and more specifically diethers of various diols. Examples of the diol used include a linear or branched alkanediol, such as ethylene glycol, propylene glycol, 1,3-propanediol, 1,4-butanediol, and neopentyl glycol. Examples of the polyether used include an alkyl ether of a trihydric or higher polyhydric alcohol, such as glycerin, trimethylolethane, trimethylolpropane, pentaerythritol, and dipentaerythritol.

The alkyl group used in the dialkyl ether and the alkyl ether of a polyhydric alcohol may be a branched or linear alkyl group having 1 to 12 carbon atoms, and particularly preferably 5 to 12 carbon atoms, similarly to the monoether. The alkyl group of the diether and the polyether may be used solely, or it may be used in combination of plural kinds thereof. In the case where the organic solvent is blended in a lubricating oil composition without removal, the ether compound can be more favorably used as a base oil by using an alkyl group having 5 to 12 carbon atoms.

The monoether, the diether, and the polyether each preferably have a molecular weight of 150 to 5,000, and more preferably 200 to 3,000. In the case where the PAG thus produced is blended in a lubricating oil composition without removal of the organic solvent as described later, the organic solvent can be more favorably used as a base oil, and the polymerization reaction in the present embodiment can be appropriately performed, when the organic solvent has a molecular weight in the range.

Examples of the polyvinyl ether used as the organic solvent include a polyvinyl ether having a branched or linear alkyl group having 1 to 4 carbon atoms on the side chain thereof and a polyvinyl ether having a polyoxyalkylene structure on the side chain thereof.

Examples of these polyvinyl ethers include a polyvinyl compound having a structural unit represented by the following general formula (2) as a repeating unit.

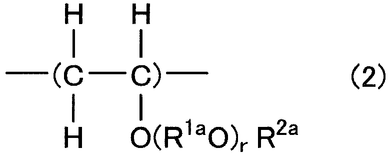

In the general formula (2), R^{1a} represents a divalent hydrocarbon group having 2 to 4 carbon atoms. Specific examples thereof include an ethylene group, a propylene group, and a butylene group, and a propylene group is preferred. R^{2a} represents an alkyl group having 1 to 4 carbon atoms, specific examples thereof include a methyl group, an ethyl group, a n-propyl group, an isopropyl group, a n-butyl group, an isobutyl group, a sec-butyl group, and a tert-butyl group, and an ethyl group and an isobutyl group are preferred.

In the general formula (2), r represents a repetition number, which is a number in a range from 0 to 10, and preferably 0 to 5, in terms of average value.

The end structure of the polyvinyl ether is not particularly limited, and an end structure having no active hydrogen atom, such as a hydroxyl group, may be used for preventing reaction with the alkylene oxide.

The repetition number of the structural unit represented by the general formula (2) may be appropriately selected corresponding to the target molecular weight.

The polyalkylene glycol ether to be used as the organic solvent is one which the end hydroxyl group of a polyalkylene glycol is etherified with a linear or branched alkyl group having 1 to 5 carbon atoms. The polyalkylene glycol ether having the end hydroxyl group that is etherified with an alkyl group is not reacted with the alkylene oxide, and thus can be properly used as the organic solvent.

The polyalkylene glycol ether used as the organic solvent may be represented, for example, by the following general formula (3).

R^{1b}[-(OR^{2b})ₘ-OR^{3b}]ₙ (3)

In the formula, R^{1b} represents an alkyl group having 1 to 5 carbon atoms, a hydrocarbon group having 2 to 6 bonding sites and having 1 to 10 carbon atoms, or an oxygen-containing hydrocarbon group having 1 to 10 carbon atoms; R^{2b} represents an alkylene group having 2 to 4 carbon atoms; R^{3b} represents an alkyl group having 1 to 5 carbon atoms; n represents an integer of 1 to 6; and m represents a number of 6 to 80 in terms of an average value of (m x n).

In the general formula (3), specific examples of the alkyl groups each represented by R^{1b} and R^{3b} include a methyl group, an ethyl group, a n-propyl group, an isopropyl group, a linear or branched butyl group of every kind, and a linear or branched pentyl group of every kind. In the case where R^{1b} and R^{3b} each represent an alkyl group, the alkyl groups may be the same as or different from each other. In the case where n is 2 or more, plural R^{3b}s in one molecule may be the same as or different from each other.

In the case where R^{1b} represents a hydrocarbon group having 2 to 6 bonding sites and having 1 to 10 carbon atoms, the hydrocarbon group may be linear or cyclic. The hydrocarbon group having two bonding sites is preferably an aliphatic hydrocarbon group, and examples thereof include an ethylene group, a propylene group, a butylene group, a pentylene group, a hexylene group, a heptylene group, an octylene group, a nonylene group, a decylene group, a cyclopentylene group, and a cyclohexylene group.

The hydrocarbon group having 3 to 6 bonding sites is preferably an aliphatic hydrocarbon group, and examples thereof include residual group obtained by removing hydroxyl groups from a polyhydric alcohol, such as trimethylolpropane, glycerin, pentaerythritol, sorbitol, 1,2,3-trihydroxycyclohexane, and 1,3,5-trihydroxycyclohexane. Examples of the oxygen-containing hydrocarbon group having 1 to 10 carbon atoms represented by R^{1b} include a linear aliphatic group and a cyclic aliphatic group each having an ether bond (for example, a tetrahydrofurfuryl group).

In the general formula (3), R^{2b} represents an alkylene group having 2 to 4 carbon atoms, and examples of the oxyalkylene group as a repeating unit include an oxyethylene group, an oxypropylene group, and an oxybutylene group. n is preferably 1 to 3, and more preferably 1.

The organic solvent may be removed after completing the reaction, or may be used without removal. When the organic solvent is not removed, in the case where the PAG thus produced is blended, for example, in a lubricating oil composition, the organic solvent is thus blended as a base oil in the lubricating oil composition.

The organic solvent is preferably a polyvinyl ether or a polyalkylene glycol ether among those described above since they are preferred as a base oil. A polyvinyl ether and a polyalkylene glycol ether are preferred also from the standpoint that PAG thus produced is easily dissolved therein as compared to the other ethers.

The polyvinyl ether and the polyalkylene glycol ether used as the organic solvent each preferably has a weight average molecular weight of 200 to 5,000, and more preferably 200 to 3,000. When the molecular weight is in the range, these compounds can be preferably used as a base oil, and the polymerization reaction can be favorably performed thereby.

### <Alkylene Oxide>

The polymerization reaction is generally performed by making the catalyst present in a mixture of the alkylene oxide and an initiator in the presence of the organic solvent.

The alkylene oxide is a monoepoxide, and specific examples thereof include an alkylene oxide having 2 to 4 carbon atoms, and more specifically include ethylene oxide, propylene oxide, and butylene oxide. Among these, ethylene oxide and propylene oxide are preferred.

### <Initiator>

The initiator suffices to be a compound having one or more hydroxyl group and may be selected corresponding to the structure of the PAG to be produced, and examples thereof include a monohydric alkylalcohol, an alkyl group of which is a linear or branched alkyl group having 1 to 10 carbon atoms; a branched or linear alkanediol, an alkane of which has about 2 to 10 carbon atoms, such as ethylene glycol, propylene glycol, 1,3-propanediol, 1,4-butanediol, and neopentyl glycol; a trihydric or higher polyhydric alcohol having about 3 to 10 carbon atoms, such as trimethylolpropane, glycerin, pentaerythritol, sorbitol, 1,2,3-trihydroxycyclohexane, and 1,3,5-trihydroxycyclohexane; and a polyalkylene glycol having a weight average molecular weight that is lower than the PAG to be produced in the present embodiment (which may be hereinafter referred to as a low-molecular weight PAG), and among these, the low-molecular weight PAG is preferred since PAG having a higher molecular weight can be efficiently produced.

Examples of the low-molecular weight PAG used as the initiator include a polyalkylene glycol represented by the following general formula (4).

R^{1C}-(OR^{2C})ₖ-OH (4)

In the general formula (4), k represents a number providing an average value of 2 to 80. R^{1C} represents an alkyl group having 1 to 5 carbon atoms or a hydrogen atom, and R^{2C} represents an alkylene group having 2 to 4 carbon atoms, in which examples of the oxyalkylene group as a repeating unit include an oxyethylene group, an oxypropylene group, and an oxybutylene group.

The weight average molecular weight of the low-molecular weight PAG is not particularly limited, and is preferably 1,000 to 20,000, and more preferably 2,000 to 20,000.

In the general formula (4), the oxyalkylene groups in one molecule may be the same as each other, and two or more kinds of oxyalkylene groups may be contained. A compound containing 50 mol% or more of an oxypropylene unit in one molecule is preferred, and a compound containing 75 mol% or more of an oxypropylene unit therein is more preferred. It is more preferred that all OR^{2C}s are oxypropylene groups. R^{1C} preferably represents a hydrogen atom.

Among the compounds, a polypropylene glycol (PPG), in which all OR^{2C}s are oxypropylene groups, and R^{1C} is a hydrogen atom, is further preferred.

The specific measure for the polymerization reaction is not particularly limited, and for example, it is preferred that the reaction is performed by gradually adding the alkylene oxide to a reaction vessel having the initiator, the catalyst, and the organic solvent having been charged therein in advance. However, a part or the whole of the organic solvent may be added to the reaction vessel along with the alkylene oxide, instead of charging in the reaction vessel in advance.

The reaction temperature is not particularly limited, and is preferably 80 to 150°C, and more preferably 100 to 130°C.

The pressure on performing the polymerization reaction is not particularly limited, and the reaction may be performed under ordinary pressure or increased pressure. In the case where the reaction is performed under increased pressure, examples of the method include a method of increasing the internal pressure by adding the alkylene oxide to the hermetically sealed reaction vessel.

The amount of the catalyst used is not particularly limited, and may be suitably 1 to 5,000 ppm based on the initiator used. In the introduction of the catalyst to the reaction vessel, the catalyst may be charged at one time in the reaction vessel as described above, and may be divided and sequentially charged therein.

The amount of the alkylene oxide fed to the reaction vessel is not particularly limited, and is generally 160 to 5,000 equivalent amount, preferably 300 to 5,000 equivalent amount, and more preferably 300 to 3,500 equivalent amount, with respect to the initiator used.

The polymerization reaction can be terminated, for example by adding a catalyst deactivator. Examples of the catalyst deactivator include an alkali metal compound, and more specifically include a sodium alkoxide, such as sodium methoxide. After deactivating the catalyst, the reaction liquid is neutralized with an acidic substance, and then purified through an appropriate post-treatment, and the deactivated catalyst component is removed from the reaction liquid.

The reaction liquid, from which the catalyst has been removed, contains a mixture of the PAG produced through the polymerization reaction and the organic solvent. While the organic solvent may be removed from the mixture, the organic solvent is preferably not removed from the standpoint of the production efficiency.

The PAG produced through the polymerization reaction thus has a hydroxyl group at the end thereof, and the end hydroxyl group may be blocked through esterification, etherification, or the like, depending on the purpose. The end hydroxyl group is preferably blocked through etherification since the end hydroxyl group is difficult to be hydrolyzed.

For example, in the case where the end is blocked through etherification, the etherification is preferably performed with a linear or branched alkyl group having 1 to 10 carbon atoms, preferably a linear or branched alkyl group having 1 to 5 carbon atoms. In the case where esterification is performed, the esterification is preferably performed with various fatty acids having about 1 to 10 carbon atoms.

In the present embodiment, as described above, a high-molecular weight PAG having a molecular weight of 20,000 or more can be efficiently produced by using the composite metal cyanide complex catalyst and the organic solvent and making the amount of the organic solvent within the certain range.

### [Method of using produced PAG]

The PAG obtained by the aforementioned production method can be applied, for example, to a purpose of a lubricating oil. The PAG produced in the present embodiment is obtained as the mixture with the organic solvent as described above, and in the case where the PAG is applied to a purpose of a lubricating oil, the mixture is preferably used without removal of the organic solvent therefrom. By using without removal of the organic solvent, the PAG can be prevented from being increased in viscosity, improving the handleability. The process steps can be reduced by using without removal of the organic solvent. Furthermore, the organic solvent functions as a base oil in a lubricating oil composition, and thus the organic solvent can be effectively used.

Accordingly, a lubricating oil composition according to one embodiment of the present invention contains PAG thus produced above, and the lubricating oil composition preferably contains a mixture containing the PAG thus produced above and the organic solvent. In this case, since the organic solvent is not removed as described above, the mixture may contain the organic solvent in an amount of 10 to 90 mass%, and preferably 30 to 70 mass%, based on the PAG thus produced.

The lubricating oil composition is generally obtained by further blending a base oil and various additives, in addition to PAG or the mixture.

The PAG thus produced above is generally used as a viscosity index improver in the lubricating oil composition. The viscosity index improver is blended in a lubricating oil composition and improves the viscosity index of the lubricating oil composition. In particular, a high-molecular weight PAG (preferably having a weight average molecular weight of 20,000 or more, and more preferably 30,000 or more) has a larger effect of improving the viscosity index, and thus can be more preferably used as a viscosity index improver.

In the case where the PAG produced is used as a viscosity index improver, while PAG obtained through purification by removing the solvent from the mixture may be used as a viscosity index improver, the mixture containing the PAG produced (for example, the mixture containing the PAG and the organic solvent) is preferably used as a viscosity index improver.

The lubricating oil composition may be used as a lubricating oil composition for a refrigerator, used by charging in an interior of a refrigerator along with a refrigerant, and specifically used for lubricating a sliding portion of a compressor or the like provided in the refrigerator.

In addition to the refrigerator, the lubricating oil composition may also be used in an internal-combustion engine, such as a gasoline engine and a diesel engine, a transmission system, a shock absorber, various gear systems, various bearing systems, other various industrial devices, and the like.

PAG produced by the aforementioned production method can also be applied to various purposes in addition to the purpose of a lubricating oil, and can be applied, for example, to purposes of a sealant, an adhesive, and the like. In this case, the PAG thus produced may be used without removal of the organic solvent from the mixture containing the PAG and the organic solvent, and may be used after the removal. The PAG obtained by the production method can be used as a raw material for a polymer material, such as urethane constituting an elastomer, a resin, rubber, and the like, and is preferably used as a raw material for urethane in the purposes of a sealant, an adhesive, and the like.

### Examples

The present invention will be described further specifically with reference to examples below, but the present invention is not limited to the examples.

The measurement of the properties was performed according to the following procedures.

### (1) Weight Average Molecular Weight (Mw)

The weight average molecular weight was measured with gel permeation chromatography (GPC). In the GPC, the measurement was performed by using two columns of TSKgel Super Multipore HZ-M, produced by Tosoh Corporation, and tetrahydrofuran as an eluent with a refractive index detector, and the weight average molecular weight was obtained with the standard polystyrene.

### [Preparation of Composite Metal Complex Catalyst]

An aqueous solution containing 10.2 g of zinc chloride and 10 g of water was placed in a 500 mL flask. Subsequently, while stirring the content of the flask and retaining the content at 40°C, an aqueous solution containing 4.3 g of potassium hexacyanocobaltate and 75 g of water was added dropwise to the flask over 30 minutes. After completing the dropwise addition, the mixture in the flask was stirred for 30 minutes, and then a mixture containing 80 g of tert-butyl alcohol, 80 g of water, and 0.6 g of polypropylene glycol (the both ends of which were hydroxyl groups) having a weight average molecular weight of 2,000 was further added to the flask, followed by stirring at 40°C for 30 minutes and at 60°C for further 60 minutes. The mixture thus obtained was filtered under increased pressure with a circular filter plate having a diameter of 125 mm and quantitative filter paper for fine particles, so as to separate a solid matter in a slurry form containing a composite metal cyanide complex catalyst.

Subsequently, the resulting solid matter was placed in a flask, to which a mixture of 36 g of tert-butyl alcohol and 84 g of water was added, followed by stirring for 30 minutes, and then the mixture was filtered under increased pressure to provide a solid matter in a slurry form. The resulting solid matter was placed in a flask, to which a mixture of 108 g of tert-butyl alcohol and 12 g of water was added, followed by stirring for 30 minutes, so as to provide a liquid containing a composite metal cyanide complex catalyst dispersed in a tert-butyl alcohol-water mixed solvent. The liquid was mixed with 120 g of polypropylene glycol (the both ends of which were hydroxyl groups) having a weight average molecular weight of 2,000 as an initiator, and then the volatile components were distilled off under reduced pressure at 80°C for 3 hours and at 115°C for further 3 hours, so as to provide a mixture containing the initiator and the composite metal cyanide complex catalyst.

### Example 1

### [Production of PAG]

In a 200 mL autoclave, 10.05 g of the mixture containing the initiator and the composite metal cyanide complex catalyst (polypropylene glycol: 10 g, composite metal cyanide complex catalyst: 0.05 g) and 28 g of polyethyl vinyl ether (weight average molecular weight: 362) (30 mass% based on the PAG to be produced) as an organic solvent were charged. After replacing the interior of the autoclave with nitrogen, 40 g of propylene oxide was added thereto, and the internal temperature was increased to 130°C. After confirming that the internal pressure of the autoclave was decreased, 43 g of propylene oxide was added at a flow rate of 3 mL/min. After the addition, the reaction was performed at the internal temperature retained to 130°C until the internal pressure of the autoclave reached 0.1 MPa or less. After the reaction, 1.5 g of sodium methoxide as a catalyst deactivator was added thereto, the mixture was stirred for 1 hour, then 1N sulfuric acid was added thereto in an amount of 1.5 times equivalent amount based on sodium, and the mixture was neutralized at 120°C for 2 hours, then dehydrated at 120°C for 2 hours, and then filtered. After the filtration, 2.0 wt% of synthetic magnesium silicate as an absorbent was added, and the mixture was processed at 120°C for 30 minutes, then dehydrated at 20 Torr for 2 hours, and then filtered, so as to provide 120 g of a mixture of PAG (92 g) produced through the aforementioned reaction and the organic solvent. Only the PAG was extracted from the resulting mixture and measured for the weight average molecular weight Mw of the PAG by the above-described method, and thus Mw was 30,000.

### Example 2

The same procedures as in Example 1 were performed except that the amount of the organic solvent used in the polymerization reaction was 65 g, which was 70 mass% based on the PAG to be produced. Only the PAG was extracted from the resulting mixture and measured for the weight average molecular weight Mw of the PAG by the above-described method, and thus Mw was 30,000.

### Example 3

The same procedures as in Example 1 were performed except that the amount of the organic solvent used in the polymerization reaction was 46 g, which was 50 mass% based on the PAG to be produced. Only the PAG was extracted from the resulting mixture and measured for the weight average molecular weight Mw of the PAG by the above-described method, and thus Mw was 30,000.

### Example 4

The same procedures as in Example 1 were performed except that the amount of the organic solvent used in the polymerization reaction was 30 g, which was 30 mass% based on the PAG to be produced, and 15.08 g of the mixture containing the initiator and the composite metal cyanide complex catalyst (polypropylene glycol: 15 g, composite metal cyanide complex catalyst: 0.08 g) was used. Only the PAG was extracted from the resulting mixture and measured for the weight average molecular weight Mw of the PAG by the above-described method, and thus Mw was 20,000.

### Comparative Example 1

Polymerization reaction was performed in the same manner as in Example 1 except that the organic solvent was not used. After the addition of the whole amount of propylene oxide, the reaction was performed while retaining the internal temperature at 130°C as similar to Example 1, but the stirring blade was stopped in the course of the reaction, and the polymerization reaction was difficult to continue.

### Comparative Example 2

Polymerization reaction was performed in the same manner as in Example 1 except that the amount of the organic solvent used in the polymerization reaction was 4.6 g, which was 5 mass% based on the PAG to be produced.

After the addition of the whole amount of propylene oxide, the reaction was performed while retaining the internal temperature at 130°C as similar to Example 1, but the stirring blade was stopped in the course of the reaction, and the polymerization reaction was difficult to continue.

### Comparative Example 3

The same procedures as in Example 1 were performed except that the amount of the organic solvent used in the polymerization reaction was 88 g, which was 95 mass% based on the PAG to be produced. In Comparative Example 3, the polymerization was not completed due to the prolonged reaction time.

As described in the foregoing, in Examples 1 to 3, PAG having a high molecular weight was able to be efficiently produced by performing the polymerization reaction in the presence of the organic solvent in an amount of 10 to 90 mass%. In Comparative Examples 1 and 2 with an amount of the organic solvent of less than 10 mass%, on the other hand, the reaction was not able to be continued due to the excessively high viscosity in the course of the reaction, and thus PAG having a high molecular weight was not able to be efficiently produced. In the case where the amount of the organic solvent exceeded 90 mass% as in Comparative Example 3, the polymerization was not completed even by prolonging the reaction time, and thus PAG having a high molecular weight was not able to be efficiently produced.

### Industrial Applicability

The polyalkylene glycol produced by the present invention is blended in a lubricating oil composition used in a refrigerator, an internal-combustion engine, a gear system, a bearing system, a transmission system, a shock absorber, and the like, and used, for example, as a viscosity index improver. The polyalkylene glycol can also be used as a raw material for urethane constituting an adhesive, a sealant, and the like.

## Claims

1. A method for producing a polyalkylene glycol, comprising performing a polymerization reaction of an alkylene oxide with a composite metal catalyst, the polymerization reaction being performed in the presence of an organic solvent in an amount of 10 to 90 mass% based on the polyalkylene glycol to be produced.

2. The method for producing a polyalkylene glycol according to claim 1, wherein the organic solvent is an ether compound.

3. The method for producing a polyalkylene glycol according to claim 2, wherein the ether compound is selected from a dialkyl ether, an alkyl group of which is a branched or linear alkyl group having 5 to 12 carbon atoms; a dialkyl diether, an alkyl group of which is a branched or linear alkyl group having 5 to 12 carbon atoms; a polyether, which is an alkyl ether of a trihydric or higher polyhydric alcohol, an alkyl group of which is a branched or linear alkyl group having 5 to 12 carbon atoms; a polyvinyl ether; and a polyalkylene glycol ether having an end hydroxyl group that is etherified with a linear or branched alkyl group having 1 to 5 carbon atoms.

4. The method for producing a polyalkylene glycol according to claim 3, wherein the ether compound is selected from a polyvinyl ether; and a polyalkylene glycol ether having an end hydroxyl group that is etherified with a linear or branched alkyl group having 1 to 5 carbon atoms.

5. The method for producing a polyalkylene glycol according to any one of claims 1 to 4, wherein the composite metal catalyst is a composite metal cyanide complex catalyst.

6. The method for producing a polyalkylene glycol according to claim 5, wherein the composite metal cyanide complex catalyst comprises an alcohol compound as an organic ligand.

7. The method for producing a polyalkylene glycol according to any one of claims 1 to 6, wherein the polyalkylene glycol is produced by performing polymerization reaction by making the composite metal catalyst present in a mixture of the alkylene oxide and an initiator, and the initiator is a compound having one or more hydroxyl group.

8. The method for producing a polyalkylene glycol according to claim 7, wherein the compound having one or more hydroxyl group is a polyalkylene glycol having a weight average molecular weight that is lower than the polyalkylene glycol to be produced.

9. The method for producing a polyalkylene glycol according to any one of claims 1 to 8, wherein the polyalkylene glycol produced has a weight average molecular weight of 20,000 or more.

10. A viscosity index improver comprising a polyalkylene glycol that is produced by the production method according to claim 9.

11. A lubricating oil composition comprising the polyalkylene glycol that is produced by the production method according to any one of claims 1 to 9.

12. A method for producing a lubricating oil composition, comprising blending a mixture comprising the polyalkylene glycol that is obtained by the production method according to any one of claims 1 to 9 and the organic solvent.
